# EUROPEAN PATENT SPECIFICATION

(11) **EP 2 163 779 B1**
(45) Date of publication and mention of the grant of the patent: **28.11.2012**
(21) Application number: 09169963.7
(22) Date of filing: 10.09.2009
(51) Int. Cl.: F16D 23/04

(54) **Double-cone synchronizer for vehicle transmissions**
Doppelkegelsynchronisiereinrichtung für Fahrzeuggetriebe
Dispositif de synchronisation double-cône pour transmissions de véhicule

(30) Priority: 11.09.2008 IT TO20080669
(43) Date of publication of application: 17.03.2010
(73) Proprietor: Oerlikon Graziano S.p.A., 10090 Rivoli Cascine Vica (TO) (IT)
(72) Inventor: Colombo, Silvano, 10070 TRAVES (Torino) (IT); Turco, Giorgio, 10090 BRUINO (Torino) (IT)
(74) Representative: Rondano, Davide

(56) References cited:
- EP-A- 0 569 789
- EP-A- 1 118 787
- US-A- 5 638 930
- US-A1- 2003 211 913
- US-B1- 6 324 930

## Description

The present invention relates to a double-cone synchronizer for vehicle transmissions, as specified in the preamble of independent claim 1.

A typical double-cone synchronizer for vehicle transmissions, of the type able for example to couple torsionally either one of a pair of idle gearwheels to a transmission shaft, basically comprises:
- a hub torsionally coupled to a transmission shaft, for example by means of a splined coupling;
- an actuating sleeve which is axially (i.e. parallel to the axis of the shaft) slidable under control of a fork-like operating member;
- two synchronizing rings each having an outer engagement toothing arranged to mesh with a corresponding inner engagement toothing of the actuating sleeve and, on the radially inner side, a conical surface;
- two inner rings each having, on the radially outer side, a conical surface;
- two intermediate rings each having, on the radially outer side, a first conical surface arranged to be brought into contact with the conical surface of the associated synchronizing ring and, on the radially inner side, a second conical surface arranged to be brought into contact with the conical surface of the associated inner ring; and
- two engagement ring gears each comprising a hub portion, which is torsionally coupled, for example by means of a splined coupling, to the respective idle gearwheel, and an outer engagement toothing intended to mesh with the inner engagement toothing of the actuating sleeve to allow the transmission of the torque between the shaft and the idle gearwheel through the synchronizer.

The synchronizing rings and the inner rings are drivingly connected for rotation to the hub and to the actuating sleeve, while the intermediate rings are drivingly connected for rotation each to the respective engagement ring gear. Since the inner rings and the associated engagement ring gears are not permanently drivingly connected for rotation to each other, sliding speeds occur between the respective contact surfaces during the synchronizing phase, which speeds reach high values in case of synchronizers having large diameters and/or high angular speeds and lead to problems in terms of wear on those surfaces and hence of life of the synchronizer.

A double-cone synchronizer for vehicle transmissions having the features set forth in the preamble of independent claim 1 is known from US 5,638,930. According to this known solution, each of the two inner rings is axially locked in both directions by means of a pair of circlips in such a manner that a certain gap is always ensured between the opposite axial surfaces of the inner ring and of the associated engagement ring gear and contact between those surfaces is always avoided. This known solution is however affected by the shortcomings of high cost, complicated assembling and great axial overall size.

It is therefore an object of the present invention to provide a double-cone synchronizer for vehicle transmissions which has a lower cost, which is easy to assemble and which has a reduced axial overall size with respect to the above-discussed prior art.

This and other objects are fully achieved according to the invention by virtue of a double-cone synchronizer for vehicle transmissions having the features set forth in the characterizing part of independent claim 1.

The features and advantages of the invention will become clear from the following detailed description, given purely by way of non-limiting example with reference to the appended drawings, in which:
Figure 1 is an axial section view of a double-cone synchronizer for vehicle transmissions according to a preferred embodiment of the present invention; and
Figure 2 is an axial section view of a spacer ring of the synchronizer of Figure 1.

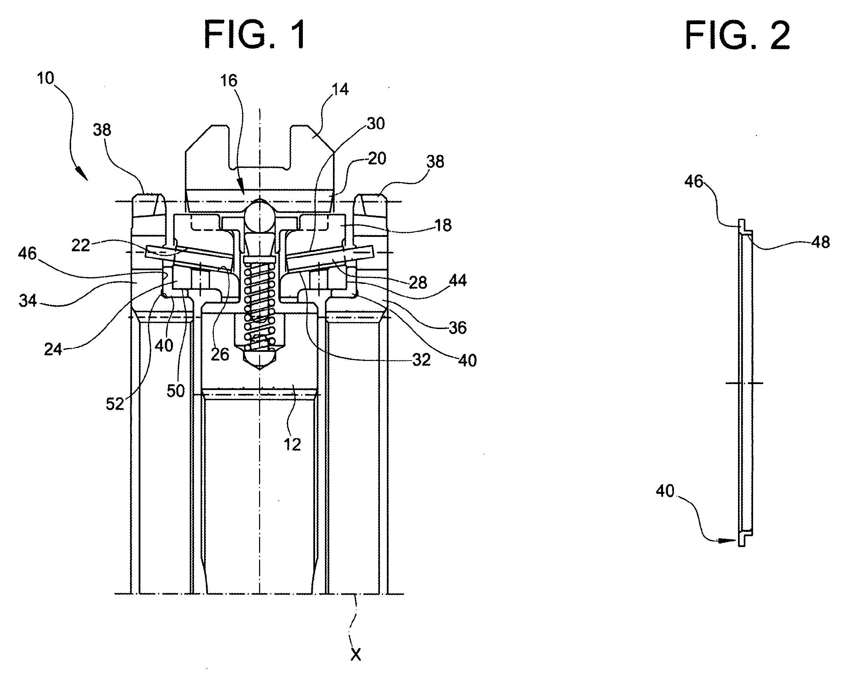

With reference first to Figure 1, a double-cone synchronizer for a vehicle transmission is generally indicated 10. The synchronizer 10 basically comprises:
- a hub 12 which in the mounted condition is torsionally coupled to a shaft (not shown) of the transmission, for example by means of a splined coupling;
- an actuating sleeve 14 which is axially (i.e. parallel to the axis of the shaft, indicated X in Figure 1) slidable under control of a fork-like control member (not shown);
- a pre-synchronizing device which is generally indicated 16 and is radially interposed between the hub 12 and the actuating sleeve 14;
- a pair of synchronizing rings 18 each having an outer engagement toothing (which cannot be seen in Figure 1 as it is angularly offset relative to the plane of the section) arranged to mesh with a corresponding inner engagement toothing 20 of the actuating sleeve 14 and, on the radially inner side, a conical surface 22;
- a pair of inner rings 24 each having, on the radially outer side, a conical surface 26;
- a pair of intermediate rings 28 each having, on the radially outer side, a first conical surface 30 arranged to be brought into contact with the conical surface 22 of the associated synchronizing ring 18 and, on the radially inner side, a second conical surface 32 arranged to be brought into contact with the conical surface 26 of the associated inner ring 24;
- a pair of engagement ring gears 34 each comprising a hub portion 36, which is torsionally coupled, for example by means of a splined coupling, to a respective idle gearwheel (not shown), and an outer engagement toothing 38 intended to mesh with the inner engagement toothing 20 of the actuating sleeve 14 to allow the transmission of the torque from the shaft to the idle gearwheel through the synchronizer 10; and
- a pair of spacer rings 40 each interposed between the hub portion 36 of the respective engagement ring gear 34 and the respective inner ring 24, so as to be axially clamped in use between the respective engagement ring gear 34 and the respective inner ring 24.

The synchronizing rings 18 and the inner rings 24 are drivingly connected for rotation to the hub 12 and to the actuating sleeve 14, while the intermediate rings 28 are drivingly connected for rotation each to a respective engagement ring gear 34. The spacer rings 40 are on the contrary free to rotate relative both to the engagement ring gears 34 and to the inner rings 24 between which they are interposed and therefore mediate the angular speeds of the opposite axial surfaces (indicated 42 and 44, respectively) of each inner ring 24 and of the associated engagement ring gear 34, thus reducing the sliding speeds and accordingly the wear of the opposite axial surfaces 42 and 44 of those components. The use of spacer rings interposed between the engagement ring gears and the inner rings and free to rotate relative to those components clearly provides a solution to the wear problems on the opposite axial surfaces of the inner rings and of the associated engagement ring gears, which solution is inexpensive, easy to assemble and of reduced axial overall size.

Advantageously, the spacer rings 40 are made of acetalic resin, or of any other material with similar low-friction characteristics, in order to further contribute to reduce the wear resulting from the sliding between the contact surfaces 42 and 44 of the inner ring 24 and of the hub portion 36 of the associated engagement ring gear 34, and therefore to the increase in life of the synchronizer.

The greater are the diameter of the synchronizer and/or the relative angular speed between the two parts to be synchronized, the more evident are the advantages achieved with the proposed solution.

The fact that a spacer ring of low-friction material is interposed between the inner ring and the engagement ring gear further allows to use for the inner ring a less expensive material than a case-hardened steel of which the engagement ring gear is made, for example a sintered steel. High wear-resistance characteristics are in fact no more required for the inner ring, as would be the case on the contrary with an inner ring and an engagement ring gear in direct contact with each other. A reduction in the cost of the synchronizer with respect to the prior art is therefore achieved as well.

With reference in particular to Figure 2, each spacer ring 40 preferably has a L-shaped cross-section, with a radially extending portion 46 and an axially extending portion 48. The radially extending portion 46 is axially interposed between the opposite axial surfaces 42 and 44 of the inner ring 24 and of the engagement ring gear 34 so as to avoid contact between those surfaces, while the axially extending portion 48 is radially interposed between the opposite radial surfaces (indicated 50 and 52, respectively) of the inner ring 24 and of the hub portion 36 of the engagement ring gear 34 so as to ensure to correct centring of the ring 40 relative to the ring gear 34.

Naturally, the principle of the invention remaining unchanged, the embodiments and manufacturing details may be widely varied with respect to those described and illustrated purely by way of non-limiting example, without thereby departing from the scope of the invention as defined in the appended claims.

For example, the invention is also applicable to a single synchronizer, i.e. to a synchronizer associated to a single gearwheel.

## Claims

1. Double-cone synchronizer (10) for vehicle transmissions, comprising
a hub (12),
an actuating sleeve (14),
at least one synchronizing ring (18) having a conical surface (22),
at least one inner ring (24) having a conical surface (26),
at least one intermediate ring (28) having a first, radially outer conical surface (30) arranged to be brought into contact with the conical surface (22) of the associated synchronizing ring (18), and a second, radially inner conical surface (32) arranged to be brought into contact with the conical surface (26) of the associated inner ring (24),
at least one engagement ring gear (34) intended to be torsionally coupled with a respective idle gearwheel,
**characterized in that** it further comprises at least one spacer ring (40) interposed between the respective engagement ring gear (34) and the respective inner ring (24) so as to be axially clamped in use between these two components, said at least one spacer ring (40) being free to rotate relative both to the respective engagement ring gear (34) and to the respective inner ring (24).

2. Synchronizer (10) according to claim 1, wherein the at least one spacer ring (40) is made of a low friction material.

3. Synchronizer (10) according to claim 2, wherein the at least one spacer ring (40) is made of an acetalic resin.

4. Synchronizer (10) according to any of the preceding claims, wherein the at least one inner ring (24) is made of a sintered steel.

5. Synchronizer (10) according to any of the preceding claims, wherein the at least one spacer ring (40) has an L-shaped cross-section, with a radially-extending portion (46) axially interposed between the respective inner ring (24) and the respective engagement ring gear (34) and with an axially-extending portion (48) radially interposed between the respective inner ring (24) and a hub portion (36) of the respective engagement ring gear (34).

## Patentansprüche

1. Doppelkonus-Synchronisiereinrichtung (10) für Fahrzeuggetriebe, aufweisend
eine Nabe (12),
eine Betätigungshülse (14),
wenigstens einen Synchronisierring (18), der eine konische Fläche (22) aufweist,
wenigstens einen inneren Ring (24), der eine konische Fläche (26) aufweist,
wenigstens einen Zwischenring (28), der eine erste, radial äußere konische Fläche (30), die eingerichtet ist, um mit der konischen Fläche (22) des zugehörigen Synchronisierringes (18) in Kontakt gebracht zu werden, und eine zweite, radial innere konische Fläche (32) aufweist, die eingerichtet ist, um mit der konischen Fläche (26) des zugehörigen inneren Ringes (24) in Kontakt gebracht zu werden,
wenigstens ein Eingriffshohlrad (34), das vorgesehen ist, um mit einem jeweiligen leerlaufenden Zahnrad torsionsmäßig verbunden zu werden,
**dadurch gekennzeichnet, dass** sie ferner wenigstens einen Abstandsring (40) aufweist, der zwischen dem jeweiligen Eingriffshohlrad (34) und dem jeweiligen inneren Ring (24) eingefügt ist, um im Gebrauch zwischen diesen beiden Komponenten axial eingeklemmt zu werden, wobei sich wenigstens ein Abstandsring (40) relativ zu sowohl dem jeweiligen Eingriffshohlrad (34) als auch dem jeweiligen inneren Ring (24) frei drehen kann.

2. Synchronisiereinrichtung (10) nach Anspruch 1, wobei der wenigstens eine Abstandsring (40) aus einem reibungsarmen Material hergestellt ist.

3. Synchronisiereinrichtung (10) nach Anspruch 2, wobei der wenigstens eine Abstandsring (40) aus einem Azetalharz hergestellt ist.

4. Synchronisiereinrichtung (10) nach einem beliebigen der vorhergehenden Ansprüche, wobei der wenigstens eine innere Ring (24) aus einem gesinterten Stahl hergestellt ist.

5. Synchronisiereinrichtung (10) nach einem beliebigen der vorhergehenden Ansprüche, wobei der wenigstens eine Abstandsring (40) einen L-förmigen Querschnitt mit einem sich radial erstrecken Abschnitt (46), der axial zwischen dem jeweiligen inneren Ring (24) und dem jeweiligen Eingriffshohlrad (34) eingefügt ist, und mit einem sich axial erstreckenden Abschnitt (48) aufweist, der radial zwischen dem jeweiligen inneren Ring (24) und einem Nabenabschnitt (36) des jeweiligen Eingriffshohlrads (34) eingefügt ist.

## Revendications

1. Synchroniseur double cône (10) pour transmissions de véhicule, comprenant
un moyeu (12),
un manchon d'activation (14),
au moins un anneau de synchronisation (18) ayant une surface conique (22),
au moins un anneau interne (24) ayant une surface conique (26),
au moins un anneau intermédiaire (28) ayant une première surface conique radialement externe (30) agencée pour être amenée en contact avec la surface conique (22) de l'anneau de synchronisation associé (18) et une seconde surface conique radialement interne (32) agencée pour être amenée en contact avec la surface conique (26) de l'anneau interne associé (24),
au moins une couronne de mise en prise (34) prévue pour être couplée en torsion avec une roue dentée folle respective,
**caractérisé en ce qu'**il comprend en outre au moins un anneau entretoise (40) intercalé entre la couronne de mise en prise (34) respective et l'anneau interne (24) respectif de façon à être axialement pincé en utilisation entre ces deux composants, ledit au moins un anneau entretoise (40) étant libre de tourner par rapport à la fois à la couronne de mise en prise (34) respective et à l'anneau interne (24) respectif.

2. Synchroniseur (10) selon la revendication 1, dans lequel au moins un anneau entretoise (40) est constitué d'un matériau de faible coefficient de frottement.

3. Synchroniseur (10) selon la revendication 2, dans lequel le au moins un anneau entretoise (40) est constitué d'une résine acétalique.

4. Synchroniseur (10) selon l'une quelconque des revendications précédentes, dans lequel le au moins un anneau interne (24) est constitué d'un acier fritté.

5. Synchroniseur (10) selon l'une quelconque des revendications précédentes , dans lequel le au moins un anneau entretoise (40) a une section en forme de L, avec une portion s'étendant radialement (46) axialement intercalée entre l'anneau interne (24) respectif et la couronne de mise en prise (34) respective et avec une portion s'étendant axialement (48) radialement intercalée entre l'anneau interne (24) respectif et une portion de moyeu (36) de la couronne de mise en prise (34) respective.
